# EUROPEAN PATENT SPECIFICATION

(11) **EP 3 739 241 B1**
(45) Date of publication and mention of the grant of the patent: **31.01.2024**
(21) Application number: 20174501.5
(22) Date of filing: 13.05.2020
(51) Int. Cl.: F16J 15/3288, F01D 11/00, F01D 5/00

(54) **BRUSH SECONDARY SEAL FOR CANTILEVERED HYDROSTATIC ADVANCED LOW LEAKAGE SEAL**
SEKUNDÄRE BÜRSTENDICHTUNG FÜR EINE FREITRAGENDE HYDROSTATISCHE FORTSCHRITTLICHE DICHTUNG MIT GERINGER LECKAGE
JOINT SECONDAIRE EN BROSSES POUR JOINT HYDROSTATIQUE AVANCÉ EN PORTE-À-FAUX À FAIBLE FUITE

(30) Priority: 13.05.2019 US 201916410049
(43) Date of publication of application: 18.11.2020
(73) Proprietor: RTX Corporation, Farmington, CT 06032 (US)
(72) Inventor: HILBERT, Brian F., Coventry, CT Connecticut 06238 (US); GYSLING, Daniel L., South Glastonbury, CT Connecticut 06073 (US); VIRTUE, John P., Middletown, CT Connecticut 06457 (US); GROVER, Eric A., Tolland, CT Connecticut 06084 (US)
(74) Representative: Dehns

(56) References cited:
- EP-A1- 2 670 954
- EP-A2- 3 081 762
- US-A- 5 799 952

## Description

### BACKGROUND

Exemplary embodiments pertain to the art of gas turbine engines, hydrostatic seals, seal assemblies, and, more particularly, to a brush secondary seal for a cantilevered hydrostatic seal.

Hydrostatic seals exhibit less leakage compared to traditional knife edge seals while exhibiting a longer life than brush seals. Some hydrostatic seals may be used between a stator and a rotor within a gas turbine engine. The hydrostatic seal is mounted to the stator to maintain a desired gap dimension between the hydrostatic seal and the rotor. The hydrostatic seal has the ability to 'track' the relative movement between the stator and the rotor throughout the engine operating profile when a pressure differential is developed across the seal.

Hydrostatic seals involve motion of a spring-attached shoe with a response based on aerodynamic forces developed between the seal shoe and a rotor surface during operation. The hydrostatic seals include one or more secondary seals loaded against a free end of the shoe, and possibly other structural components of the overall seal assembly. The need for reliable secondary sealing options is recognized for hydrostatic seals, particularly those with a cantilevered shoe. Such seals include compliant beam elements that are separated by gaps. Reducing leakage across these gaps to avoid a potentially significant performance penalty is desirable.

US 5 799 952 A discloses a sealing brush element for sealing the gap between a stator and rotor of a gas turbine engine. The brush seal element includes bristles secured between a backing member and a mounting ring connected to the stator. The free ends of the bristles contact the rotor shaft to complete the seal between the rotor and stator. The backing member includes an axially directed annular flange which engages the bristles to provide support and prevent the bristles from bending or buckling.

### BRIEF DESCRIPTION

Viewed from one aspect, there is provided a hydrostatic seal configured to be disposed between relatively rotatable components. The seal includes a seal carrier. The seal also includes a beam extending axially from a forward end to an aft end, the beam connected to the seal carrier at one of the forward end and the aft end, the beam free at the other end, such that the beam is cantilevered with respect to the seal carrier, the beam having a sealing surface; one or more teeth included on the sealing surface; and a brush seal operatively coupled to the seal carrier and in contact with the beam.

The beam may include a flange extending radially outwardly into a region at least partially defined by the seal carrier and the beam, the brush seal in contact with the flange.

The flange may extend perpendicular to the axial direction of the beam.

The brush seal may extend axially.

The brush seal may extend radially.

Bristles of the brush seal may be in contact with a forward face of the flange.

The flange may be oriented at an angle between parallel and perpendicular to a radially outer surface of the beam.

The brush seal may be oriented at an angle that is perpendicular to the flange.

The beam may be cantilevered to the seal carrier at the forward end of the beam.

The beam may be cantilevered to the seal carrier at the aft end of the beam.

The brush seal may be in contact with the beam proximate the end of the beam that is free.

Viewed from another aspect, there is provided a seal assembly according to claim 12. The seal assembly includes a stator. The seal assembly also includes a rotor. The seal assembly further includes a first hydrostatic seal disposed between the stator and the rotor. The seal includes a seal carrier. The seal also includes a beam extending axially from a forward end to an aft end, the beam connected to the seal carrier at one of the forward end and the aft end, the beam free at the other end such that the beam is cantilevered with respect to the seal carrier, the beam having a sealing surface. The seal also includes one or more teeth included on the sealing surface, and a brush seal operatively coupled to the seal carrier and in contact with the beam. The beam including a flange extending radially outwardly into a region at least partially defined by the seal carrier and the beam. The seal further includes a brush seal in contact with the flange of the beam.

The flange may extend perpendicular to the axial direction of the beam.

The brush seal may extend axially.

The brush seal may extend radially.

Bristles of the brush seal may be in contact with a forward face of the flange.

The flange may be oriented at an angle between parallel and perpendicular to a radially outer surface of the beam.

The brush seal may be oriented at an angle that is perpendicular to the flange.

Viewed from a further aspect, there is provided a gas turbine engine according to claim 13. The gas turbine engine including a compressor section, a combustor section, a turbine section, and a seal assembly according to claim 12. The seal assembly includes a stator. The seal assembly also includes a rotor. The seal assembly further includes a first hydrostatic seal disposed between the stator and the rotor. The seal includes a seal carrier. The seal also includes a beam extending axially from a forward end to an aft end, the beam connected to the seal carrier at one of the forward end and the aft end, the beam free at the other end such that the beam is cantilevered with respect to the seal carrier, the beam having a sealing surface. The seal also includes one or more teeth included on the sealing surface, and a brush seal operatively coupled to the seal carrier and in contact with the beam. The beam including a flange extending radially outwardly into a region at least partially defined by the seal carrier and the beam. The seal further includes a brush seal in contact with the flange of the beam.

The flange may extend perpendicular to the axial direction of the beam.

The brush seal may extend axially.

The brush seal may extend radially.

Bristles of the brush seal may be in contact with a forward face of the flange.

The flange may be oriented at an angle between parallel and perpendicular to a radially outer surface of the beam.

The brush seal may be oriented at an angle that is perpendicular to the flange.

The brush seal may extend at an angle between 0 and 90 degrees relative to the forward face of the flange.

### BRIEF DESCRIPTION OF THE DRAWINGS

The following descriptions should not be considered limiting but are provided by way of example only. With reference to the accompanying drawings, like elements are numbered alike:
FIG. 1 is a side, partial cross-sectional view of a gas turbine engine;
FIG. 2 is a side, elevational, cross-sectional view of a hydrostatic seal assembly according to an aspect of the disclosure;
FIG. 3 is a side, elevational, cross-sectional view of the hydrostatic seal assembly according to another aspect of the disclosure; and
FIG. 4 is a side, elevational, cross-sectional view of the hydrostatic seal assembly according to another aspect of the disclosure.

### DETAILED DESCRIPTION

A detailed description of one or more embodiments of the disclosed apparatus and method are presented herein by way of exemplification and not limitation with reference to the Figures.

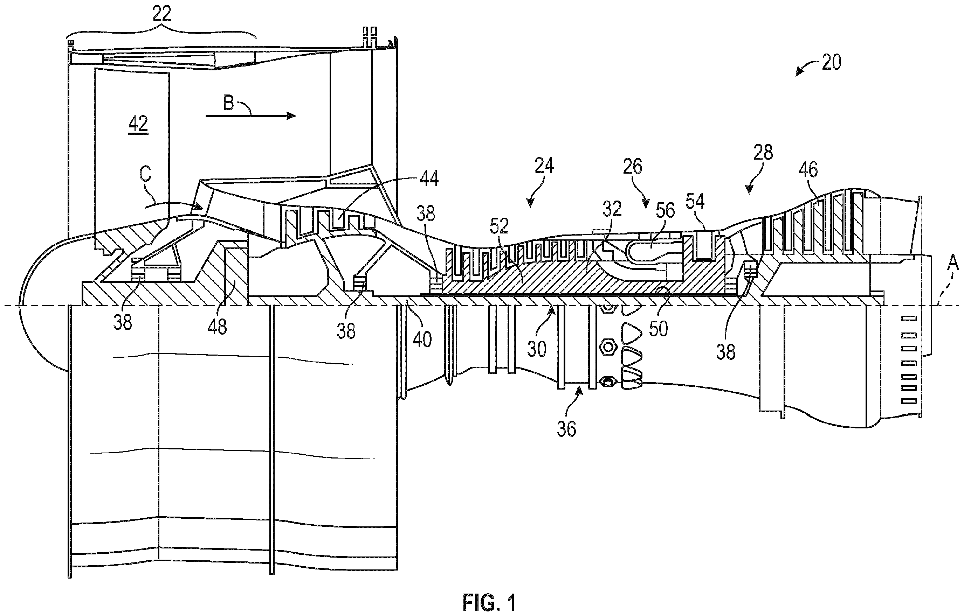

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach (274 m/s) and about 35,000 feet (10,668 meters). The flight condition of 0.8 Mach (274 m/s) and 35,000 feet (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

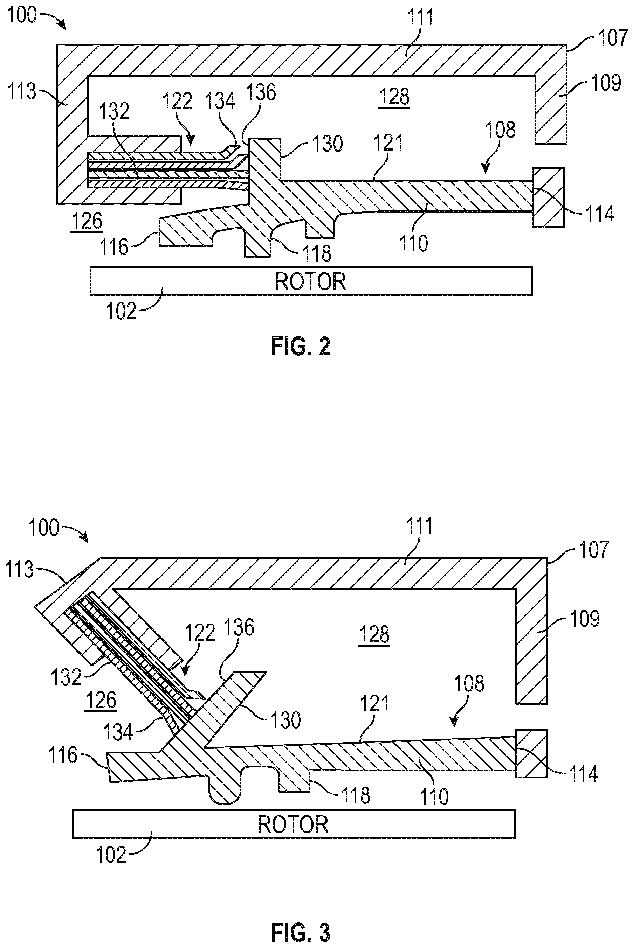

FIG. 2 illustrates a hydrostatic seal indicated generally at 100. The hydrostatic seal 100 is intended to create a seal between two relatively rotating components, such as a fixed stator and a rotating rotor 102. The hydrostatic seal 100 includes a carrier 107 and a beam 108, which is located in a non-contact position along the exterior surface of the rotor 102. The beam 108 is formed with a sealing surface 110. For purposes of the present disclosure, the term "axial" or "axially spaced" refers to a direction along the rotational axis of the rotor, whereas "radial" refers to a direction perpendicular to the rotational axis of the rotor.

Rather than relying on the structural stiffness of the beam 108, the embodiments described herein include a cantilevered beam as the beam 108. Therefore, the beam 108 is connected to the carrier 107 of the seal 100 in a pinned manner or some suitable alternative mechanical fastener that allows pivoting movement of the beam 108, relative to the carrier 107. The carrier 107 is fixed to a static structure (not shown). In the illustrated embodiments, the beam 108 is pinned (i.e., cantilevered) to the carrier 107 at a rear axial end 114 of the beam 108, while a forward axial end 116 of the beam 108 is free and not operatively coupled to any other structure. The carrier 107 includes a first segment 109 extending radially, a second segment 111 extending axially forward from the first segment 109, and a third segment 113 extending radially inwardly away from the second segment 111 toward the rotor 102.

In the illustrated embodiment, the rear axial end 114 of the beam 108 is cantilevered to the first segment 109 of the carrier 107 to form a substantially open front end. However, it is to be appreciated that the beam 108 is operatively connected to the carrier 107 at an opposite end of the beam 108. In particular, the front end 116 of the beam 108 is pinned, or otherwise cantilevered, to the carrier 107 in some embodiments, with the front end 116 connected to the third segment 113 of the carrier 107.

The initial assembly location of the beam 108 has a defined radial gap between the beam 108 and the rotating surface. One or more teeth 118 are included on the sealing surface 110 of the beam 108. In operation, as the airflow between the beam 108 and rotor 102 increases, the pressure field under the teeth 118 will be dropped to a lower pressure than the exit pressure in a region aft of the teeth 118. The reduction in pressure across the beam 108 causes a net aerodynamic force acting on the beam 108 such that the force balance between the aerodynamic forces on the outer diameter 121 of the beam 108 and the inner diameter, i.e., sealing surface 110, causes the beam 108 to be moved radially inwardly toward the rotor 102, thus decreasing the gap until the seal reaches an equilibrium position considering the increased structural force of the displaced cantilevered beam. Conversely, in operation, when the gap closes below a desired level, the aerodynamic force on the sealing surface 110 across the beam 108 increases, causing an increase in radial pressure force, which overcomes the force on the outer diameter 121, thus forcing the beam 108 radially outwardly from the rotor 102 until the seal reaches an equilibrium position considering the structural force of the displaced cantilevered beam. The cantilevered beam 108 deflects and moves to create a primary seal of the gap between the rotor and stator within predetermined design tolerances.

The cantilevered seals described herein are more robust to wear, when compared to prior hydrostatic seals that have contact between stationary and moving components that, due to friction, can cause the shoe to become fully or partially pinned in place, and be unable to avoid contact with the rotor during a transient maneuver. In prior hydrostatic seals, large normal loads developed at operating conditions are reacted at a sliding interface between the shoe and carrier backing plate. The cantilevered seals provide a way of transmitting axial forces in a manner independent of the shoe radial motion, as the differential pressure is reacted through the cantilever. The seals described herein are designed to eliminate rotor contact. Frictional loads are difficult to characterize and can change over the life of the seal and lead to flutter. The cantilevered seals described herein avoid such problems.

The embodiments disclosed herein include a secondary seal in the form of a brush seal 122 is provided proximate the free end of the beam 108 (i.e., closer to the free end than the secured end of the beam). In the illustrated embodiments, the free end is the axially forward end 116, but the reverse may be true, as described above in detail. It is to be appreciated that some embodiments are contemplated to include more brush seals to define a brush seal assembly or only one brush seal. For purposes of descriptive brevity, a single brush seal is described herein. The brush seal 122 provides a seal between the illustrated high pressure region 126 and the low pressure region 128 in a space radially outward of the beam 108.

In the illustrated embodiments, a flange 130 of the beam 108 extends radially outwardly from the beam 108 into the low pressure region 128 at least partially defined by the beam 108 and the carrier 107. A base 132 of the brush seal 122 is secured to the third segment 113 of the carrier 107, with bristles 134 of the brush seal 122 in contact with the flange 130 to provide a seal. In the illustrated embodiment of FIG. 2, the brush seal 122 is oriented substantially axially (i.e., direction along the rotational axis of the rotor), such that the bristles 134 of the brush seal 122 extend substantially perpendicular to a forward face 136 of the flange 130. Although illustrated and described as having the brush seal 122 in contact with the flange 130, it is contemplated that the brush seal 122 is in contact with the axially forward end 116 itself in some embodiments.

Other orientations of the brush seal 122 are contemplated. For example, as shown in FIG. 3, the flange 130 and the brush seal 122 may be angled relative to the illustrated orientations of FIG. 2. In particular, the brush seal 122 may be secured to the second segment 111 or the third segment 113 of the carrier 107 and oriented at an angle that is between perpendicular and parallel to the axial and radial directions, as defined herein. In such an embodiment, the flange 130 is angled between parallel and perpendicular to the rotational axis of the rotor to allow the brush seal 122 to extend substantially perpendicular to the forward face 136 of the flange 130, with the bristles 134 in contact therewith. It is to be appreciated that any angle between 0 and 90 degrees is contemplated.

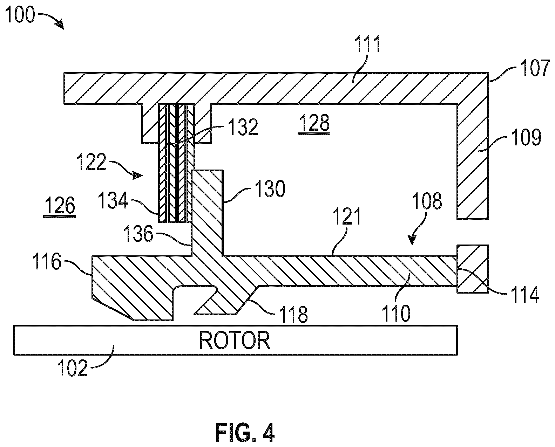

FIG. 4 illustrates another angular orientation of the brush seal 122. In particular, the brush seal 122 is secured to the second portion 111 of the carrier 107 and extend substantially radially. The flange 130 extends substantially perpendicularly. The bristles 134 extend radially inwardly to an extent sufficient to contact the forward face 136 of the flange 130.

The brush seals 122 utilized as the secondary seals herein are provided at the free end of the cantilevered beam 108 to reduce leakage. Although cantilevered seals may be aerodynamically stable, the brush seal 122 provides the benefit of additional mechanical damping. Additionally, the overall cantilevered seal and brush seal assembly has less friction than "conventional" hydrostatic seal assemblies. The brush seal 122 provides enough friction to dampen an aerodynamic instability without affecting seal operability.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the appended claims. Therefore, it is intended that the present invention not be limited to the particular embodiment disclosed as the best mode contemplated for carrying out this present invention, but that the present invention will include all embodiments falling within the scope of the claims.

## Claims

1. A hydrostatic seal (100) configured to be disposed between relatively rotatable components, the seal comprising:
a seal carrier (107);
a beam (108) extending axially from a forward end (116) to an aft end (114), the beam (108) connected to the seal carrier (107) at one of the forward end (116) and the aft end (114), the beam (108) free at the other end such that the beam is cantilevered with respect to the seal carrier, the beam (108) having a sealing surface (110);
one or more teeth (118) included on the sealing surface (110); and
a brush seal (122) operatively coupled to the seal carrier (107) and in contact with the beam (108).

2. The seal (100) of claim 1, wherein the beam (108) includes a flange (130) extending radially outwardly into a region at least partially defined by the seal carrier (107) and the beam (108), the brush seal (122) in contact with the flange (130).

3. The seal (100) of claim 2, wherein the flange (130) extends perpendicular to the axial direction of the beam (108).

4. The seal of claim 3, wherein the brush seal (122) extends axially.

5. The seal of claim 3, wherein the brush seal (122) extends radially.

6. The seal (100) of any of claims 2 to 5, wherein bristles (134) of the brush seal (122) are in contact with a forward face (136) of the flange (130).

7. The seal (100) of claim 2, wherein the flange (130) is oriented at an angle between parallel and perpendicular to a radially outer surface of the beam (108).

8. The seal (100) of claim 7, wherein the brush seal (122) is oriented at an angle that is perpendicular to the flange (130).

9. The seal (100) of any preceding claim, wherein the beam (108) is cantilevered to the seal carrier (107) at the forward end (116) of the beam (108).

10. The seal (100) of any of claims 1 to 8, wherein the beam (108) is cantilevered to the seal carrier (107) at the aft end (114) of the beam (108).

11. The seal (100) of any preceding claim, wherein the brush seal (122) is in contact with the beam (108) proximate the end of the beam that is free.

12. A seal assembly, the seal assembly comprising:
a stator;
a rotor (102); and
a first hydrostatic seal (100) as claimed in any of claims 2 to 8 disposed between the stator and the rotor (102).

13. A gas turbine engine (20) comprising:
a compressor section (24);
a combustor section (26);
a turbine section (28); and
a seal assembly as claimed in claim 12.

14. The gas turbine engine (20) of claim 13, wherein the brush seal (122) extends at an angle between 0 and 90 degrees relative to the forward face (136) of the flange (130).

## Patentansprüche

1. Hydrostatische Dichtung (100), die dazu konfiguriert ist, zwischen relativ zueinander drehbaren Komponenten angeordnet zu sein, wobei die Dichtung Folgendes umfasst:
einen Dichtungsträger (107);
einen Arm (108), der sich axial von einem vorderen Ende (116) zu einem hinteren Ende (114) erstreckt, wobei der Arm (108) an einem von dem vorderen Ende (116) und dem hinteren Ende (114) mit dem Dichtungsträger (107) verbunden ist, wobei der Arm (108) am anderen Ende frei ist, sodass der Arm in Bezug auf den Dichtungsträger freitragend ist, wobei der Arm (108) eine Dichtungsfläche (110) aufweist;
einen Zahn oder mehrere Zähne (118), die an der Dichtungsfläche (110) beinhaltet sind; und
eine Bürstendichtung (122), die mit dem Dichtungsträger (107) wirkgekoppelt ist und mit dem Arm (108) in Kontakt steht.

2. Dichtung (100) nach Anspruch 1, wobei der Arm (108) einen Flansch (130) beinhaltet, der sich radial nach außen in einen Bereich erstreckt, der zumindest teilweise durch den Dichtungsträger (107) und den Arm (108) definiert ist, wobei die Bürstendichtung (122) mit dem Flansch (130) in Kontakt steht.

3. Dichtung (100) nach Anspruch 2, wobei sich der Flansch (130) senkrecht zu der axialen Richtung des Arms (108) erstreckt.

4. Dichtung nach Anspruch 3, wobei sich die Bürstendichtung (122) axial erstreckt.

5. Dichtung nach Anspruch 3, wobei sich die Bürstendichtung (122) radial erstreckt.

6. Dichtung (100) nach einem der Ansprüche 2 bis 5, wobei Borsten (134) der Bürstendichtung (122) mit einer Vorderseite (136) des Flansches (130) in Kontakt stehen.

7. Dichtung (100) nach Anspruch 2, wobei der Flansch (130) in einem Winkel zwischen parallel und senkrecht zu einer radial äußeren Fläche des Arms (108) ausgerichtet ist.

8. Dichtung (100) nach Anspruch 7, wobei die Bürstendichtung (122) in einem Winkel ausgerichtet ist, der senkrecht zu dem Flansch (130) ist.

9. Dichtung (100) nach einem der vorhergehenden Ansprüche, wobei der Arm (108) an dem vorderen Ende (116) des Arms (108) zu dem Dichtungsträger (107) freitragend ist.

10. Dichtung (100) nach einem der Ansprüche 1 bis 8, wobei der Arm (108) an dem hinteren Ende (114) des Arms (108) zu dem Dichtungsträger (107) freitragend ist.

11. Dichtung (100) nach einem der vorhergehenden Ansprüche, wobei die Bürstendichtung (122) mit dem Arm (108) in der Nähe des freien Endes des Arms in Kontakt steht.

12. Dichtungsbaugruppe, wobei die Dichtungsbaugruppe Folgendes umfasst:
einen Stator;
einen Rotor (102); und
eine erste hydrostatische Dichtung (100) nach einem der Ansprüche 2 bis 8, die zwischen dem Stator und dem Rotor (102) angeordnet ist.

13. Gasturbinentriebwerk (20), umfassend:
einen Verdichterabschnitt (24);
einen Brennkammerabschnitt (26);
einen Turbinenabschnitt (28); und
eine Dichtungsbaugruppe nach Anspruch 12.

14. Gasturbinentriebwerk (20) nach Anspruch 13, wobei sich die Bürstendichtung (122) in einem Winkel zwischen 0 und 90 Grad relativ zu der Vorderfläche (136) des Flansches (130) erstreckt.

## Revendications

1. Joint (100) hydrostatique conçu pour être disposé entre des composants relativement rotatifs, le joint comprenant :
un support de joint (107) ;
une poutre (108) s'étendant axialement depuis une extrémité avant (116) jusqu'à une extrémité arrière (114), la poutre (108) étant reliée au support de joint (107) au niveau de l'une de l'extrémité avant (116) et de l'extrémité arrière (114), la poutre (108) étant libre au niveau de l'autre extrémité de sorte que la poutre est en porte-à-faux par rapport au support de joint, la poutre (108) ayant une surface d'étanchéité (110) ;
une ou plusieurs dents (118) incluses sur la surface d'étanchéité (110) ; et
un joint en brosses (122) couplé de manière opérationnelle au support de joint (107) et en contact avec la poutre (108).

2. Joint (100) selon la revendication 1, dans lequel la poutre (108) comporte une bride (130) s'étendant radialement vers l'extérieur dans une région au moins partiellement définie par le support de joint (107) et la poutre (108), le joint en brosses (122) étant en contact avec la bride (130).

3. Joint (100) selon la revendication 2, dans lequel la bride (130) s'étend perpendiculairement à la direction axiale de la poutre (108).

4. Joint selon la revendication 3, dans lequel le joint en brosses (122) s'étend axialement.

5. Joint selon la revendication 3, dans lequel le joint en brosses (122) s'étend radialement.

6. Joint (100) selon l'une quelconque des revendications 2 à 5, dans lequel les poils (134) du joint en brosses (122) sont en contact avec une face avant (136) de la bride (130).

7. Joint (100) selon la revendication 2, dans lequel la bride (130) est orientée selon un angle entre parallèle et perpendiculaire à une surface radialement extérieure de la poutre (108).

8. Joint (100) selon la revendication 7, dans lequel le joint en brosses (122) est orienté selon un angle perpendiculaire à la bride (130).

9. Joint (100) selon une quelconque revendication précédente, dans lequel la poutre (108) est en porte-à-faux par rapport au support de joint (107) au niveau de l'extrémité avant (116) de la poutre (108).

10. Joint (100) selon l'une quelconque des revendications 1 à 8, dans lequel la poutre (108) est en porte-à-faux par rapport au support de joint (107) au niveau de l'extrémité arrière (114) de la poutre (108).

11. Joint (100) selon une quelconque revendication précédente, dans lequel le joint en brosses (122) est en contact avec la poutre (108) à proximité de l'extrémité de la poutre qui est libre.

12. Ensemble joint, l'ensemble joint comprenant :
un stator ;
un rotor (102) ; et
un premier joint (100) hydrostatique selon l'une quelconque des revendications 2 à 8, disposé entre le stator et le rotor (102).

13. Moteur à turbine à gaz (20) comprenant :
une section de compresseur (24) ;
une section de chambre de combustion (26) ;
une section de turbine (28) ; et
un ensemble de joint selon la revendication 12.

14. Moteur à turbine à gaz (20) selon la revendication 13, dans lequel le joint en brosses (122) s'étend selon un angle compris entre 0 et 90 degrés par rapport à la face avant (136) de la bride (130).
